# EUROPÄISCHE PATENTSCHRIFT

(11) **EP 2 627 437 B1**
(45) Veröffentlichungstag und Bekanntmachung des Hinweises auf die Patenterteilung: **24.12.2014**
(21) Anmeldenummer: 11764474.0
(22) Anmeldetag: 21.09.2011
(51) Int. Cl.: B01D 63/08, B01D 61/36

(54) **MEHRSTUFIGE MEMBRANDESTILLATIONSVORRICHTUNG**
MULTISTAGE MEMBRANE DISTILLATION DEVICE
DISPOSITIF DE DISTILLATION MULTI-ÉTAGES À MEMBRANES

(30) Priorität: 11.10.2010 DE 102010048160
(43) Veröffentlichungstag der Anmeldung: 21.08.2013
(73) Patentinhaber: AAA Water Technologies AG, 6330 Cham (CH)
(72) Erfinder: HEINZL, Wolfgang, 83561 Ramerberg (DE)
(74) Vertreter: Manitz, Finsterwald & Partner GbR
(86) Internationale Anmeldenummer: PCT/EP2011/004726
(87) Internationale Veröffentlichungsnummer: WO 2012/048788

(56) Entgegenhaltungen:
- EP-A1- 1 925 355
- WO-A1-2005/089914
- US-A- 3 477 917
- SCHNEIDER K ET AL: "MEMBRANDESTILLATION", CHEMIE INGENIEUR TECHNIK, WILEY VCH. VERLAG, WEINHEIM; DE, Bd. 56, Nr. 7, 1. Januar 1984 (1984-01-01) , Seiten 514-521, XP000867616, ISSN: 0009-286X, DOI: 10.1002/CITE.330560703

## Beschreibung

Die Erfindung betrifft eine mehrstufige Membrandestillationsvorrichtung mit einer Heizstufe, wenigstens einer, vorzugsweise mehreren Kondensations-/Verdampfungsstufen und einer Kondensationsstufe, die nacheinander von einer aufzukonzentrierenden Flüssigkeit durchströmt sind, wobei jede Kondensations-/Verdampfungsstufe jeweils mehrere Kondensationseinheiten und mehrere Verdampfereinheiten sowie mehrere parallele, jeweils zwischen einer Kondensationseinheit und einer an diese angrenzenden Verdampfereinheit gebildete, die aufzukonzentrierende Flüssigkeit führende Strömungskanäle umfasst, eine jeweilige Kondensationseinheit einen zumindest teilweise von einer Kondensationswand begrenzten ersten Dampfraum und eine jeweilige Verdampfereinheit einen zumindest teilweise durch eine dampfdurchlässige flüssigkeitsdichte Membranwand begrenzten zweiten Dampfraum umfasst und in einer jeweiligen Kondensations-/Verdampfungsstufe wenigstens ein zwischen einer solchen Kondensationseinheit und einer solchen an diese angrenzenden Verdampfereinheit gebildeter, die aufzukonzentrierende Flüssigkeit führender Strömungskanal vorgesehen ist, so dass die aufzukonzentrierende Flüssigkeit über die Kondensationswand erhitzt wird und der aus der aufzukonzentrierenden Flüssigkeit entstehende Dampf durch die Membranwand hindurch in den zweiten Dampfraum gelangt.

In der WO 2005/089914 und der WO 2007/054311 ist jeweils eine zwei Kondensations-/Verdampfungsstufen aufweisende Membrandestillationsvorrichtung dieser Art beschrieben.

Bisher wurde vorgeschlagen, Dampf aus den verschiedenen Stufen in seitlichen Dampfkanälen zu sammeln (vgl. die noch nicht veröffentlichte DE 10 2009 020 128).

Da in solchen Dampfsammelkanälen sich die Dampfvolumina addieren sowie höhere Strömungsgeschwindigkeiten und Reibungsverluste auftreten, sind einem Aufbau einer Membrandestillationsvorrichtung mit einer größeren Anzahl von Einheiten insbesondere durch die Strömungsgeschwindigkeit Grenzen gesetzt.

Bei der aus der WO 2005/089914 bekannten Membrandestillationsvorrichtung wird der in einer jeweiligen vorangehenden Stufe entstehende Dampf gesammelt und über eine Dampfleitung der unmittelbar darauffolgenden Stufe zugeführt, wo er anschließend auf die Kondensationseinheiten dieser Stufe verteilt wird. Auch hier treten nun aber wieder die zuvor genannten Probleme auf.

Der Erfindung liegt im Wesentlichen die Aufgabe zugrunde, eine verbesserte mehrstufige Membrandestillationsvorrichtung der eingangs genannten Art zu schaffen, bei der die zuvor genannten Probleme insbesondere auch bei einer größeren Anzahl von Stufen beseitigt sind.

Erfindungsgemäß wird diese Aufgabe dadurch gelöst, dass der in einem jeweiligen Dampfraum einer jeweiligen vorangehenden Stufe entstehende Dampf jeweils über einen ausschließlich diesen Dampf führenden und diesen ausschließlich an die unmittelbar darauffolgende Stufe weiterführenden Dampfkanal in eine Kondensationseinheit der unmittelbar darauffolgenden Stufe überführt wird, wobei der in einem jeweiligen Dampfraum einer jeweiligen vorangehenden Stufe entstehende Dampf über den betreffenden Dampfkanal jeweils in nur eine Kondensationseinheit der unmittelbar darauf folgenden Stufe überführt wird.

Aufgrund dieser Ausbildung sind dem Aufbau einer Membrandestillationsvorrichtung mit einer größeren Anzahl von Einheiten oder Stufen praktisch keine Grenzen durch die Dampfgeschwindigkeit mehr gesetzt.

Von Vorteil ist insbesondere auch, wenn zur Bildung eines jeweiligen Dampfkanals zwischen einer jeweiligen Verdampfereinheit einer jeweiligen vorangehenden Stufe und einer jeweiligen Kondensationseinheit einer jeweiligen unmittelbar darauf folgenden Stufe die Verdampfereinheit einen Dampfaustrittskanal und die Kondensationseinheit einen Dampfeintrittskanal besitzt und die beiden Einheiten so angeordnet sind, dass sie mit ihren den Dampfaustrittskanal bzw. den Dampfeintrittskanal aufweisenden Seiten einander unmittelbar benachbart und zugewandt sind, wobei dazwischen jedoch noch ein Spalt insbesondere zum Abführen von Destillat verbleiben kann.

Gemäß einer bevorzugten praktischen Ausführungsform umfasst die Heizstufe, in der die zugeführte aufzukonzentrierende Flüssigkeit vorgeheizt wird, wenigstens eine Heizeinheit und wenigstens eine Verdampfereinheit, wobei eine jeweilige Heizeinheit einen zumindest teilweise von einer fluiddichten wärmeleitenden Wand begrenzten Heizfluidraum und eine jeweilige Verdampfereinheit einen zumindest teilweise durch eine dampfdurchlässige flüssigkeitsdichte Membranwand begrenzten Dampfraum umfasst und in der Heizstufe wenigstens ein zwischen einer Heizeinheit und einer an diese angrenzenden Verdampfereinheit gebildeter, die aufzukonzentrierende Flüssigkeit führender Strömungskanal vorgesehen ist, so dass die aufzukonzentrierende Flüssigkeit über die fluiddichte wärmeleitende Wand vorgeheizt wird und der aus der aufzukonzentrierenden Flüssigkeit entstehende Dampf durch die Membranwand hindurch in den Dampfraum gelangt.

Dabei wird der Dampf aus dem Dampfraum einer jeweiligen Verdampfereinheit der Heizstufe vorteilhafterweise über einen ausschließlich diesen Dampf führenden und diesen ausschließlich an die unmittelbar darauf folgende Kondensations-/Verdampfungsstufe weiterführenden Dampfkanal in eine Kondensationseinheit dieser unmittelbar darauf folgenden Kondensations-/Verdampfungsstufe überführt, wobei der Dampf aus dem Dampfraum einer jeweiligen Verdampfereinheit der Heizstufe über den betreffenden Dampfkanal jeweils in nur eine Kondensationseinheit der unmittelbar darauf folgenden Kondensations-/Verdampfungsstufe überführt wird.

Die Heizstufe kann mehrere Heizeinheiten und/oder mehrere Verdampfereinheiten sowie mehrere parallele, jeweils zwischen einer Heizeinheit und einer an diese angrenzenden Verdampfereinheit gebildete, die aufzukonzentrierende Flüssigkeit führende Strömungskanäle aufweisen.

Dabei ist von Vorteil, wenn zur Bildung eines jeweiligen Dampfkanals zwischen einer jeweiligen Verdampfereinheit der Heizstufe und einer jeweiligen Kondensationseinheit der unmittelbar darauf folgenden Kondensations-/Verdampfungsstufe die Verdampfereinheit einen Dampfaustrittskanal und die Kondensationseinheit einen Dampfeintrittskanal besitzt und die beiden Einheiten so angeordnet sind, dass sie mit ihren den Dampfaustrittskanal bzw. den Dampfeintrittskanal aufweisenden Seiten einander unmittelbar benachbart und zugewandt sind, wobei dazwischen jedoch noch ein Spalt insbesondere zum Abführen von Destillat verbleiben kann.

Bevorzugt wird der letzten Kondensations-/Verdampfungsstufe unmittelbar nachgeordneten Kondensationsstufe der Dampf aus einer jeweiligen Verdampfereinheit der letzten Kondensations-/Verdampfungsstufe zugeführt wird.

Dabei umfasst die Kondensationsstufe vorteilhafterweise wenigstens eine Kühleinheit und wenigstens eine Kondensationseinheit, wobei eine jeweilige Kühleinheit einen zumindest teilweise von einer fluiddichten wärmeleitenden Wand begrenzten Kühlfluidraum und eine jeweilige Kondensationseinheit wieder einen zumindest teilweise von einer Kondensationswand begrenzten Dampfraum umfasst, dem über einen jeweiligen Dampfkanal Dampf aus der letzten Kondensations-/Verdampfungsstufe zugeführt wird, und in der Kondensationsstufe wenigstens eine Kühleinheit zumindest einer Kondensationseinheit unmittelbar benachbart ist, so dass die Kondensationswand der jeweiligen Kondensationseinheit über die Kühleinheit gekühlt wird, wobei in der Praxis dazwischen jedoch noch ein Spalt zugelassen sein kann.

Der Dampf aus einer jeweiligen Verdampfereinheit der letzten Kondensations-/Verdampfungsstufe wird zweckmäßigerweise über einen ausschließlich diesen Dampf führenden und diesen ausschließlich an die Kondensationsstufe weiterführenden Dampfkanal in eine Kondensationseinheit der Kondensationsstufe geführt.

Die Kondensationsstufe kann insbesondere mehrere Kühleinheiten und/oder mehrere Verdampfereinheiten umfassen.

Bevorzugt wird der Dampf aus dem Dampfraum einer jeweiligen Verdampfereinheit der letzten Kondensations-/Verdampfungsstufe über den betreffenden Dampfkanal jeweils in nur eine Kondensationseinheit der Kondensationsstufe überführt.

Hierbei ist von Vorteil, wenn zur Bildung eines jeweiligen Dampfkanals zwischen einer jeweiligen Verdampfereinheit der letzten Kondensations-/Verdampfungsstufe und einer jeweiligen Kondensationseinheit der unmittelbar darauf folgenden Kondensationsstufe die Verdampfereinheit einen Dampfaustrittskanal und die Kondensationseinheit einen Dampfeintrittskanal besitzt und die beiden Einheiten so angeordnet sind, dass sie mit ihren dem Dampfaustrittskanal bzw. den Dampfeintrittskanal aufweisenden Seiten einander unmittelbar benachbart und zugewandt sind, wobei dazwischen jedoch noch ein Spalt insbesondere zum Abführen von Destillat verbleiben kann.

Gemäß einer bevorzugten praktischen Ausführungsform ist die mehrstufige Membrandestillationsvorrichtung als modulares Strömungssystem mit einer Vielzahl von Rahmenelementen ausgeführt, wobei die verschiedenen Funktionseinheiten wie insbesondere eine jeweilige Kondensationseinheit, eine jeweilige Verdampfereinheit, eine jeweilige Heizeinheit und/oder eine jeweilige Kühleinheit jeweils in Form eines solchen Rahmenelements vorgesehen sein können. Die Rahmenelemente können mit Stegstrukturen versehen sein, über die sie insbesondere zur Bildung der Heizstufe, einer jeweiligen Kondensations-/Verdampfungsstufe und/oder der Kondensationsstufe miteinander verbindbar sind. Die Rahmenelemente können jeweils einen von einem äußeren Rahmen umschlossenen Innenbereich umfassen, der vorzugsweise mit einem insbesondere gitterartigen Abstandshalter 46 versehen ist, auf dessen beiden Seiten insbesondere zur Bildung eines jeweiligen Dampfraums, eines jeweiligen Heizfluidraums oder eines jeweiligen Kühlfluidraums insbesondere jeweils eine Funktionsfläche, vorzugsweise eine Folie oder Membran aufgebracht sein kann.

Die mehrstufige bzw. Multieffekt-Membrandestillationsvorrichtung kann also insbesondere aus Rahmenelementen aufgebaut sein. Die Rahmenelemente können aufgebrachte Funktionsflächen umfassen. Es sind insbesondere die folgenden Arten von Rahmenelementen denkbar: beidseitig jeweils mit einer Membran versehenes Rahmenelement, beidseitig jeweils mit einer fluiddichten Folie versehenes Rahmenelement, mit einer Folie bespanntes, Fluidkanäle aufweisendes Rahmenelement. Beispielsweise aus solchen Rahmenelementen kann die erfindungsgemäße mehrstufige Membrandestillationsvorrichtung aufgebaut werden.

Als Heizfluid in der Heizstufe kann beispielsweise Wasser verwendet werden. Grundsätzlich kann jedoch auch eine Beheizung mit Dampf erfolgen. In letzterem Fall erfolgt der Multieffektprozess dann in einer oder mehreren Kondensationseinheiten, denen der Dampf zugeführt wird.

Über die Heizeinheiten wird die aufzukonzentrierende Flüssigkeit aufgeheizt. Die aufzukonzentrierende Flüssigkeit kann im Gleichstrom mit dem Dampf, im Gegenstrom zum Dampf und/oder pro Stufe geführt werden.

Bevorzugt befindet sich die aufzukonzentrierende Lösung über alle Stufen auf der zum Absolutdruck im Dampfraum einer jeweiligen angrenzenden Verdampfereinheit korrespondierenden Siedetemperatur, wie dies in der WO 2007/054311 beschrieben ist, die hiermit in den Offenbarungsgehalt der vorliegenden Anmeldung mit einbezogen wird.

Vorteilhafterweise kann die mehrstufige Membrandestillationsvorrichtung auch eine Vorwärmung für die aufzukonzentrierende Flüssigkeit umfassen, bei der die aufzukonzentrierende Flüssigkeit von der Kondensationsstufe her zuströmt und beispielsweise in mit Folien versehenen Rahmenelementen geführt ist. Dabei wird die aufzukonzentrierende Flüssigkeit bevorzugt über Dampf vorgewärmt. Es kann die gesamte aufzukonzentrierende Flüssigkeit bis zur Heizstufe geführt werden, oder die pro Stufe benötigte Menge an aufzukonzentrierender Flüssigkeit kann in die entsprechende Stufe und in die Strömungskanäle abgeleitet werden.

Die mehrstufige Membrandestillationsvorrichtung kann ein gegenüber der Umgebung vakuumdichtes Gehäuse umfassen, in der die verschiedenen Stufen untergebracht sind.

Der in die Kondensationseinheiten eintretende Dampf kondensiert an den Kondensationsflächen. Die entsprechende Wärme wird über die betreffende Fläche an die aufzukonzentrierende Flüssigkeit übertragen. Der in dieser entstehende Dampf tritt durch die Membran der angrenzenden Verdampfereinheit hindurch in deren Dampfraum, der mit dem Druck des Dampfraums der jeweiligen Kondensationseinheit der darauf folgenden Kondensations-/Verdampfungsstufe kommuniziert.

Die Heizfluidräume der Heizeinheiten der Heizstufe sind nur über beispielsweise in den betreffenden Rahmenelementen vorgesehene Bohrungen für die nicht kondensierbaren Gase in den Kondensationseinheiten und eine Drossel am Boden zur Führung des Destillats in den Kondensations-/Verdampfungsabschnitt mit dem Kondensations-/Verdampfungsabschnitt verbunden. In dem Kondensations-/Verdampfungsabschnitt ist der Absolutdruck niedriger als in der Heizstufe.

Der im Dampfraum einer jeweiligen Verdampfungseinheit der Heizstufe entstehende Dampf kann in den ihm unmittelbar gegenüberliegenden Dampfraum einer jeweiligen Kondensationseinheit des Kondensations-/Verdampfungsabschnitts eintreten und dort kondensieren, wobei dazwischen jedoch noch ein Spalt insbesondere zum Abführen von Destillat verbleiben kann. Auch hier wird wieder Wärme übertragen, und im Dampfraum der benachbarten Verdampfungseinheit, der mit dem Druckniveau des Dampfraums einer benachbarten Kondensationseinheit des Kondensations-/Verdampfungsabschnitts kommuniziert, entsteht neuer Dampf.

Bei den Stegstrukturen, über die die einzelnen Rahmenelemente miteinander verbunden werden können, kann es sich beispielsweise um Schweißstegstrukturen oder Klebestrukturen handeln, über die die Rahmenelemente miteinander verschweißt bzw. verklebt werden. Im Fall von Schweißstegstrukturen kann zur Verbindung der Rahmenelemente beispielsweise ein Reibschweißverfahren, Laserschweißverfahren und/oder Heizelementschweißverfahren angewandt werden.

Mit der erfindungsgemäßen mehrstufigen Membrandestillationsvorrichtung werden unter anderem die folgenden Vorteile erzielt:
Es können sehr große Austauschflächen auf kleinem Volumen verbaut werden. Der aus einer jeweiligen Verdampfungseinheit austretende Dampf tritt in der darauf folgenden Stufe in den Dampfraum einer Kondensationseinheit ein. Es werden keine Dampfvolumenströme mehr aufaddiert, so dass keine zunehmenden Strömungsgeschwindigkeiten mehr auftreten, die bisher einen größeren Aufbau thermischer Anlagen limitierten.

Die Erfindung wird im Folgenden anhand von Ausführungsbeispielen unter Bezugnahme auf die Zeichnung näher erläutert; in dieser zeigen:
- Fig. 1: eine schematische Draufsicht einer beispielhaften Ausführungsform einer mehrstufigen Membrandestillationsvorrichtung,
- Fig. 2: eine mit der Ausführungsform gemäß Fig. 1 vergleichbare Ausführungsform der mehrstufigen Membrandestillationsvorrichtung, wobei zusätzlich eine Vorwärmung der aufzukonzentrierenden Flüssigkeit vorgesehen ist,
- Fig. 3: eine beispielhafte Ausführungsform eines als Kondensationseinheit ausgeführten Rahmenelements sowie eine beispielhafte Ausführungsform eines als Verdampfereinheit ausgeführten Rahmenelements in perspektivischer Darstellung,
- Fig. 4: eine schematische Vorderansicht des als Verdampferelement ausgeführten Rahmenelements gemäß Fig. 3,
- Fig. 5: eine schematische Vorderansicht des als Kondensationselement ausgeführten Rahmenelements gemäß Fig. 3,
- Fig. 6: eine schematische Vorderansicht einer beispielhaften Ausführungsform eines Rahmenelements, das sowohl als Heizeinheit als auch als Kühleinheit einsetzbar ist,
- Fig. 7: eine schematische Vorderansicht einer beispielhaften Ausführungsform einer eine Heizstufe, eine Kondensations-/Verdampfungsstufe und eine Kondensationsstufe umfassenden mehrstufigen Membrandestillationsvorrichtung, und
- Fig. 8: eine schematische perspektivische Ansicht einer mit der Ausführungsform gemäß Fig. 7 vergleichbaren Ausführungsform der mehrstufigen Membrandestillationsvorrichtung, bei der zusätzlich wieder eine Vorwärmung der aufzukonzentrierenden Flüssigkeit vorgesehen ist.

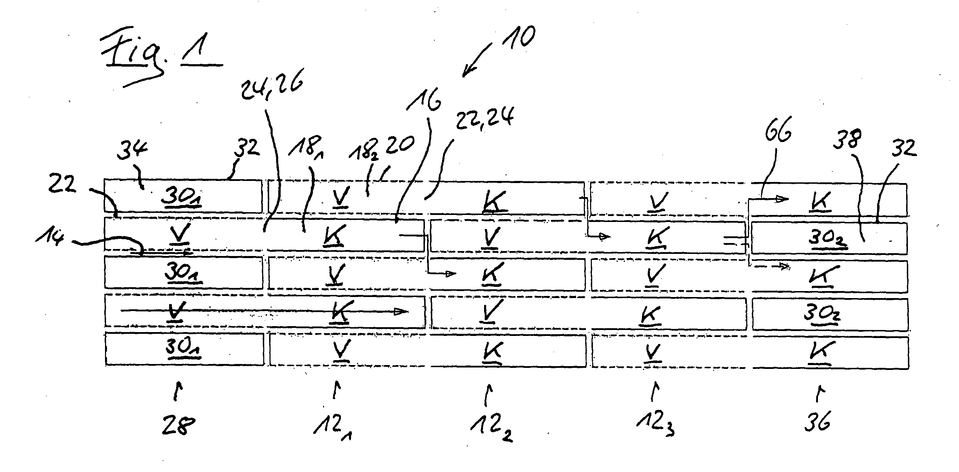

Fig. 1 zeigt in schematischer Draufsicht eine beispielhafte Ausführungsform einer mehrstufigen Membrandestillationsvorrichtung 10.

Wie beispielsweise dieser Darstellung gemäß Fig. 1 entnommen werden kann, umfasst eine solche mehrstufige Membrandestillationsvorrichtung 10 eine Heizstufe 28, vorzugsweise mehrere Kondensations-/Verdampfungsstufen 12₁ - 12₃ und eine Kondensationsstufe 36. Die Stufen 28, 12₁ - 12₃, 36 sind nacheinander von einer aufzukonzentrierenden Flüssigkeit 14 durchströmt.

Jede Kondensations-/Verdampfungsstufe 12₁ - 12₃ umfasst jeweils wenigstens eine Kondensationseinheit K und wenigstens eine Verdampfereinheit V, wobei eine jeweilige Kondensationseinheit K einen zumindest teilweise von einer Kondensationswand 16 begrenzten ersten Dampfraum 18₁ und eine jeweilige Verdampfereinheit V einen zumindest teilweise durch eine dampfdurchlässige flüssigkeitsdichte Membranwand 20 begrenzten zweiten Dampfraum 18₂ umfasst.

In einer jeweiligen Kondensations-/Verdampfungsstufe 12₁ - 12₃ ist wenigstens ein zwischen einer solchen Kondensationseinheit K und einer solchen an diese angrenzenden Verdampfereinheit V gebildeter, die aufzukonzentrierende Flüssigkeit 14 führender Strömungskanal 22 vorgesehen, so dass die aufzukonzentrierende Flüssigkeit 14 über die Kondensationswand 16 erhitzt wird und der aus der aufzukonzentrierenden Flüssigkeit 14 entstehende Dampf durch die Membranwand 20 hindurch in den zweiten Dampfraum 18₂ gelangt.

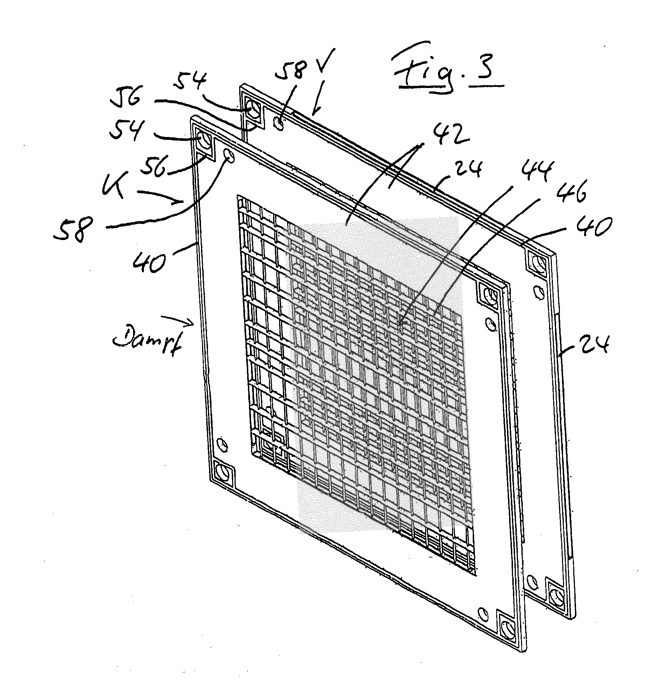

Dabei wird der in einer jeweiligen vorangehenden Stufe 28, 12₁ - 12₃ entstehende Dampf über einen ausschließlich diesen Dampf führenden und diesen ausschließlich an die unmittelbar darauf folgende Stufe 12₁ - 12₃, 36 weiterführenden Dampfkanal 24, 26 (siehe z.B. Fig. 3 - 5) in eine Kondensationseinheit K der unmittelbar darauf folgenden Stufe 12₁ - 12₃, 36 überführt.

Bevorzugt umfasst die mehrstufige Membrandestillationsvorrichtung 10 mehr als drei Kondensations-/Verdampfungsstufen 12₁ - 12₃. Grundsätzlich können jedoch auch weniger als drei solche Kondensations-/Verdampfungsstufen vorgesehen sein.

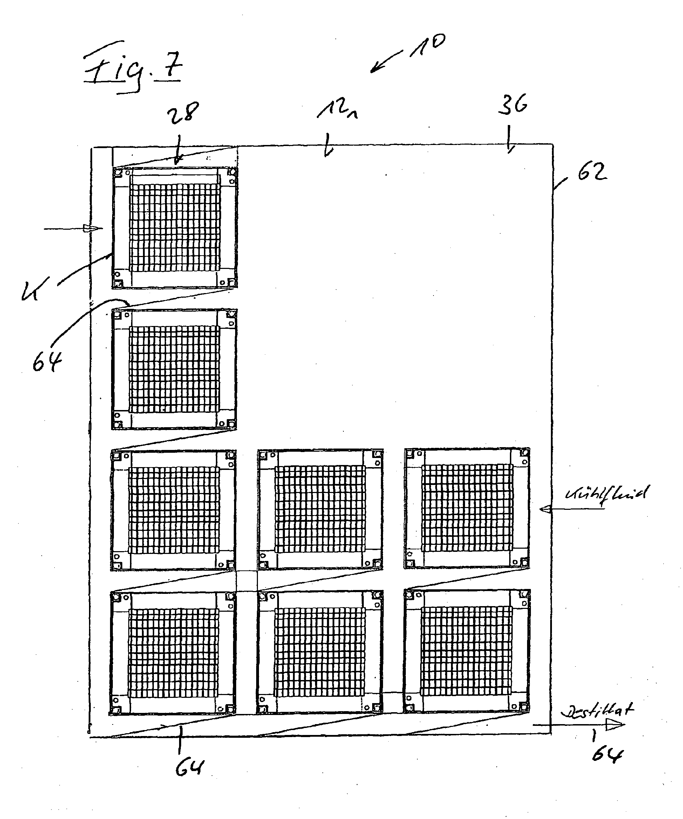

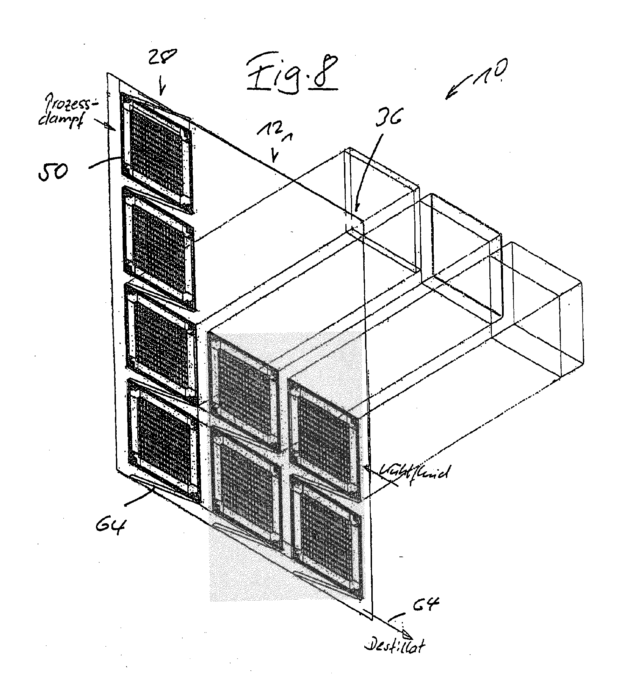

Wie sich beispielsweise aus den Fig. 7 und 8 ergibt, können insbesondere auch mehrere Stufen 28, 12₁ - 12₃, 36 untereinander angeordnet sein.

Zumindest eine jeweilige Kondensations-/Verdampfungsstufe 12₁ - 12₃ kann auch jeweils mehrere Kondensationseinheiten K und/oder mehrere Verdampfereinheiten V sowie mehrere parallele, jeweils zwischen einer Kondensationseinheit K und einer an diese angrenzenden Verdampfereinheit V gebildete, die aufzukonzentrierende Flüssigkeit 14 führende Strömungskanäle 22 aufweisen.

Bevorzugt wird der in einem jeweiligen Dampfraum 18₂ einer jeweiligen vorangehenden Stufe 28, 12₁ - 12₃ entstehender Dampf über den betreffenden Dampfkanal 24, 26 jeweils in nur eine Kondensationseinheit K der unmittelbar darauf folgenden Stufe 12₁ - 12₃, 36 überführt.

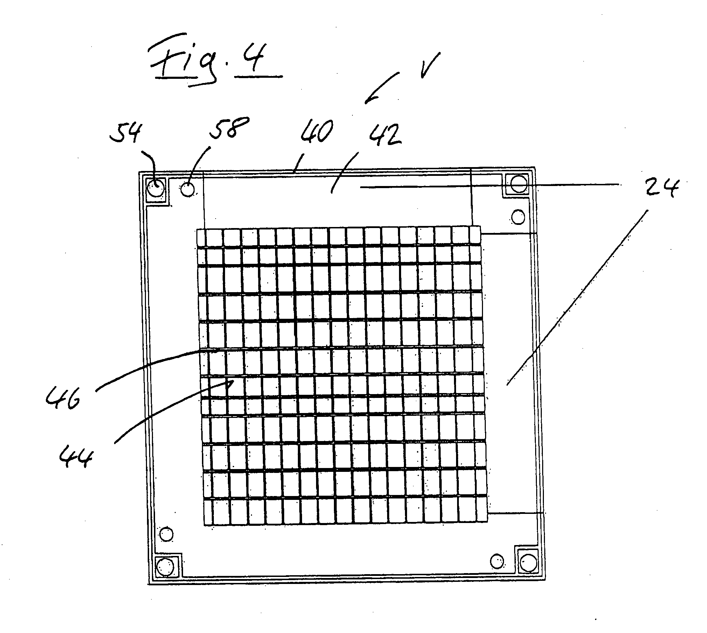

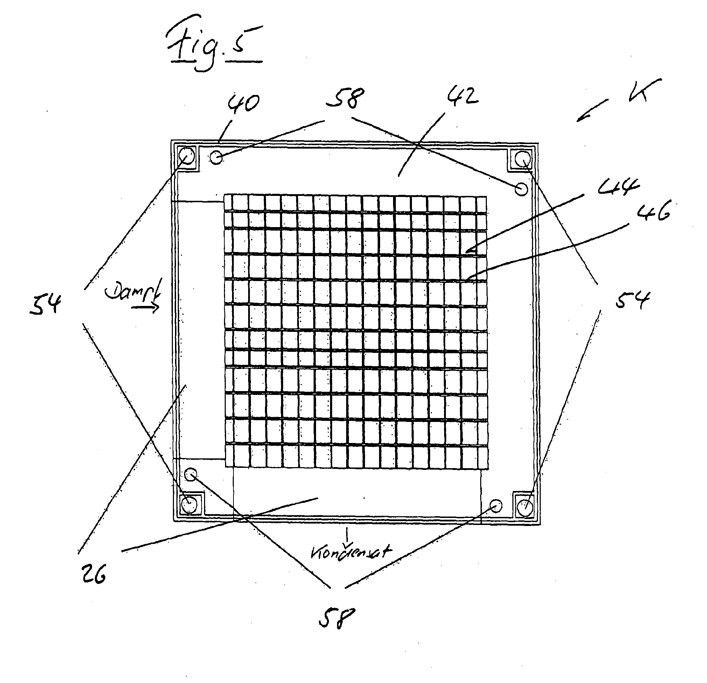

Zur Bildung eines jeweiligen Dampfkanals 24, 26 zwischen einer jeweiligen Verdampfereinheit V einer jeweiligen vorangehenden Stufe 28, 12₁-12₃ und einer jeweiligen Kondensationseinheit K einer jeweiligen unmittelbar darauf folgenden Stufe 12₁ - 12₃, 36 kann die Verdampfereinheit V einen Dampfaustrittskanal 24 (vgl. beispielsweise Fig. 3 und 4) und die Kondensationseinheit K einen Dampfeintrittskanal 26 (vgl. beispielsweise Fig. 5) besitzen. Dabei sind die beiden Einheiten V, K vorzugsweise so angeordnet, dass sie mit ihren dem Dampfaustrittskanal 24 bzw. den Dampfeintrittskanal 26 aufweisenden Seiten einander unmittelbar benachbart und zugewandt sind, wobei dazwischen jedoch noch ein Spalt insbesondere zum Abführen von Destillat verbleiben kann (vgl. beispielsweise Fig. 1).

In der Heizstufe 26 kann die zugeführte aufzukonzentrierende Flüssigkeit vorgeheizt werden. Dabei kann eine solche Heizstufe 28 beispielsweise wenigstens eine Heizeinheit 30₁ und wenigstens eine Verdampfereinheit V umfassen, wobei eine jeweilige Heizeinheit 30₁ einen zumindest teilweise von einer fluiddichten wärmeleitenden Wand 32 begrenzten Heizfluidraum 34 und eine jeweilige Verdampfereinheit V einen zumindest teilweise durch eine dampfdurchlässige flüssigkeitsdichte Membranwand 20 begrenzten Dampfraum 18₂ umfasst.

Dabei kann in der Heizstufe 28 wenigstens ein zwischen einer Heizeinheit 30₁ und einer an diese angrenzenden Verdampfereinheit V gebildeter, die aufzukonzentrierende Flüssigkeit 14 führende Strömungskanal 22 vorgesehen sein, so dass die aufzukonzentrierende Flüssigkeit 14 über die fluiddichte wärmeleitende Wand 32 vorgeheizt wird und der aus der aufzukonzentrierenden Flüssigkeit 14 entstehende Dampf durch die Membran 20 hindurch in den Dampfraum 18₂ gelangt.

Der Dampf aus dem Dampfraum 18₂ einer jeweiligen Verdampfereinheit V der Heizstufe 28 kann über einen ausschließlich diesen Dampf führenden und diesen ausschließlich an die unmittelbar darauf folgende Kondensations-/Verdampfungsstufe 12₁ - 12₃ weiterführenden Dampfkanal 24, 26 in eine Kondensationseinheit K dieser unmittelbar darauf folgenden Kondensations-/Verdampfungsstufe 12₁ - 12₃ überführt werden.

Die Heizstufe 28 kann mehrere Heizelemente 30₁ und/oder mehrere Verdampfereinheiten V sowie mehrere parallele, jeweils zwischen einer Heizeinheit 30₁ und einer an diese angrenzenden Verdampfereinheit V gebildete, die aufzukonzentrierende Flüssigkeit 14 führende Strömungskanäle 22 aufweisen.

Bevorzugt wird der Dampf aus dem Dampfraum 18₂ einer jeweiligen Verdampfereinheit V der Heizstufe 28 über den betreffenden Dampfkanal 24, 26 jeweils in nur eine Kondensationseinheit K der unmittelbar darauf folgenden Kondensations-/Verdampfungsstufe 12₁ - 12₃ überführt.

Zur Bildung eines jeweiligen Dampfkanals 24, 26 zwischen einer jeweiligen Verdampfereinheit V der Heizstufe 28 und einer jeweiligen Kondensationseinheit K der unmittelbar darauf folgenden Kondensations-/Verdampfungsstufe 12₁ - 12₃ kann die Verdampfereinheit V einen Dampfaustrittskanal 24 (vgl. z.B. Fig. 3 und 4) und die Kondensationseinheit K einen Dampfeintrittskanal 26 (vgl. z.B. Fig. 5) besitzen. Dabei können die beiden Einheiten V, K dann so angeordnet werden, dass sie mit ihren den Dampfaustrittskanal 24 bzw. den Dampfeintrittskanal 26 aufweisenden Seiten einander unmittelbar benachbart und zugewandt sind, wobei dazwischen jedoch noch ein Spalt insbesondere zum Abführen von Destillat verbleiben kann.

Der der letzten Kondensations-/Verdampfungsstufe 12₃ unmittelbar nachgeordneten Kondensationsstufe 36 kann der Dampf aus einer jeweiligen Verdampfereinheit V der letzten Kondensations-/Verdampfungsstufe 12₃ zugeführt werden.

Wie ebenfalls wieder der Fig. 1 entnommen werden kann, kann die Kondensationsstufe 36 wenigstens eine Kühleinheit 30₁ und wenigstens eine Kondensationseinheit K umfassen. Dabei kann eine jeweilige Kühleinheit 30₂ einen zumindest teilweise von einer fluiddichten wärmeleitenden Wand 32 begrenzten Kühlfluidraum 38 und eine jeweilige Kondensationseinheit K insbesondere wieder einem zumindest teilweise von einer Kondensationswand 16 begrenzten Dampfraum 18₁ aufweisen, dem über einem jeweiligen Dampfkanal 24, 26 Dampf aus der letzten Kondensations-/Verdampfungsstufe 12₃ zugeführt wird. In der Kondensationsstufe K ist bevorzugt wenigstens eine Kühleinheit 30₂ zumindest einer Kondensationseinheit K unmittelbar benachbart, so dass die Kondensationswand 16 der jeweiligen Kondensationseinheit K über die Kühleinheit 30₂ gekühlt wird, wobei auch in diesem Fall noch ein Spalt verbleiben kann.

Der Dampf aus einer jeweiligen Verdampfereinheit V der letzten Kondensations-/Verdampfungsstufe 12₃wird vorzugsweise über einen ausschließlich diesen Dampf führenden und diesen ausschließlich an die Kondensationsstufe 36 weiterführenden Dampfkanal 24, 26 in eine Kondensationseinheit K der Kondensationsstufe 36 geführt.

Die Kondensationsstufe 36 kann mehrere Kühleinheiten 30₂ und/oder mehrere Verdampfereinheit V umfassen.

Bevorzugt wird der Dampf aus dem Dampfraum 18₂ einer jeweiligen Verdampfereinheit V der letzten Kondensations-/Verdampfungsstufe 12₃ über den betreffenden Dampfkanal 24, 26 jeweils in nur eine Kondensationseinheit K der Kondensationsstufe 36 überführt.

Zur Bildung eines jeweiligen Dampfkanals 24, 26 zwischen einer jeweiligen Verdampfereinheit V der letzten Kondensations-/Verdampfungsstufe 12₃ und einer jeweiligen Kondensationseinheit K der unmittelbar darauf folgenden Kondensationsstufe 36 kann die Verdampfereinheit V wieder einen Dampfaustrittskanal 24 und die Kondensationseinheit K wieder einen Dampfeintrittskanal 26 besitzen. Die beiden Einheiten V, K können dann insbesondere wieder so angeordnet werden, dass sie mit ihren den Dampfaustrittskanal 24 bzw. den Dampfeintrittskanal 26 aufweisenden Seiten einander unmittelbar benachbart und zugewandt sind, wobei dazwischen jedoch noch ein Spalt insbesondere zum Abführen von Destillat verbleiben kann.

Auch in allen zuvor genannten Fällen kann ein jeweiliger Dampfkanal 24, 26 insbesondere durch einen Dampfaustrittskanal 24 und einen Dampfeintrittskanal 26 gebildet werden, indem die beiden betreffenden Einheiten V, K relativ zueinander so angeordnet werden, dass sie mit ihren den Dampfaustrittskanal 24 bzw. den Dampfeintrittskanal 26 aufweisenden Seiten einander unmittelbar benachbart und zugewandt sind, wobei dazwischen jedoch noch ein Spalt insbesondere zum Abführen von Destillat verbleiben kann.

Die beiden Einheiten V, K werden im Bereich dieser Dampfaustritts- bzw. Dampfeintrittskanäle 24, 26 dann zweckmäßigerweise so miteinander verbunden, dass Dampf vom Dampfaustrittskanal 24 vorzugsweise zumindest im Wesentlichen unmittelbar in den Dampfeintrittskanal 26 gelangen kann.

In der Heizstufe 28 kann beispielsweise eine Beheizung mit Wasser erfolgen. Grundsätzlich ist jedoch auch ein anderes Heizfluid denkbar.

Die Ableitung nicht kondensierbarer Gase ist durch Pfeile 66 angedeutet.

Der Prozess kann auch mit Dampf beheizt werden, wobei in diesem Fall eine jeweilige Heizeinheit beispielsweise durch eine jeweilige Kondensationseinheit ersetzt werden kann.

Über eine jeweilige Heizeinheit wird die aufzukonzentrierende Flüssigkeit beheizt. Die aufzukonzentrierende Flüssigkeit kann beispielsweise im Gleichstrom mit dem Dampf, im Gegenstrom zum Dampf oder pro Stufe geführt werden.

Wie eingangs bereits ausgeführt, ist für den Multieffektprozess die aufzukonzentrierende Flüssigkeit bevorzugt über alle Stufen auf der zum Absolutdruck im jeweiligen Dampfraum korrespondierenden Siedetemperatur. Dabei wird insbesondere auch nochmals auf die WO 2007/054311 verwiesen, die in den Offenbarungsgehalt der vorliegenden Anmeldung mit einbezogen wird.

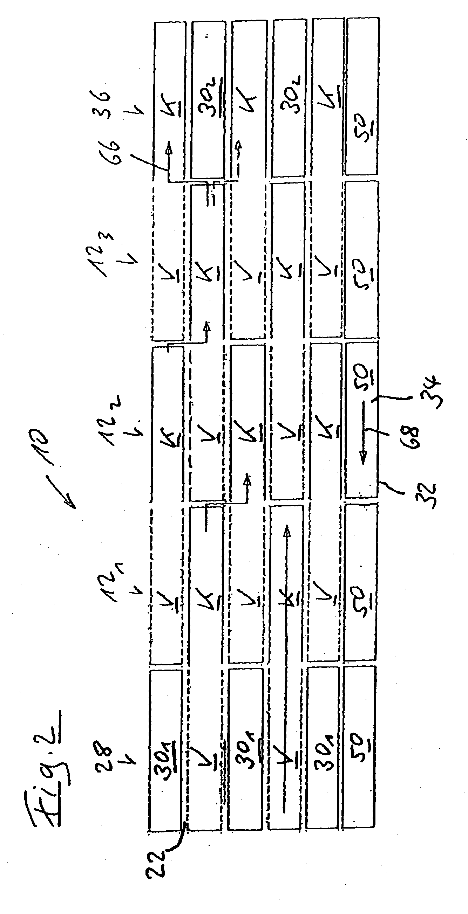

Fig. 2 zeigt eine mit der Ausführungsform gemäß Fig. 1 vergleichbare Ausführungsform einer mehrstufigen Membrandestillationsvorrichtung 10, wobei beispielsweise dieser Fig. 2 jedoch entnommen werden kann, dass in einer jeweiligen zweistufigen Membrandestillationsvorrichtung 10 zusätzlich eine Vorwärmung 68 der aufzukonzentrierenden Flüssigkeit 14 vorgesehen sein kann. Die aufzukonzentrierende Flüssigkeit 14 kann von der Kondensationsstufe 36 zugeführt werden. Dabei kann sie in Vorwärmeinheiten 50 geführt sein. Diese Vorwärmeinheiten 50 können beispielsweise wieder einen zumindest teilweise von einer fluiddichten wärmeleitenden Wand 32 begrenzten Fluidraum 34 aufweisen. Die Vorwärmung kann insbesondere über Dampf erfolgen. Es kann insbesondere die gesamte aufzukonzentrierende Flüssigkeit 14 bis zur Heizstufe 28 geführt werden, oder es kann beispielsweise die pro Stufe benötigte Menge an aufzukonzentrierender Flüssigkeit in die entsprechende Stufe und in die die aufzukonzentrierende Flüssigkeit führenden Strömungskanäle 22 abgeleitet werden.

Im Übrigen kann diese eine Vorwärmung umfassende mehrstufige Membrandestillationsvorrichtung 10 zumindest im Wesentlichen beispielsweise wieder so ausgeführt sein, wie dies anhand der Fig. 1 beschrieben wurde. Einander entsprechenden Teilen sind gleiche Bezugszeichen zugeordnet.

Wie beispielsweise auch den Fig. 3 bis 6 entnommen werden kann, kann die mehrstufige Membrandestillationsvorrichtung 10 insbesondere als modulares Strömungssystem mit einer Vielzahl von Rahmenelementen ausgeführt sein. Dabei können beispielsweise die verschiedenen Funktionseinheiten wie insbesondere eine jeweilige Kondensationseinheit K, eine jeweiliger Verdampfereinheit V, eine jeweilige Heizeinheit 30₁, eine jeweilige Kühleinheit 30₂ und/ oder eine jeweilige Vorwärmeinheit 50 jeweils in Form eines solchen Rahmenelements vorgesehen sein.

Die Rahmenelemente sind vorzugsweise mit Stegstrukturen 40 versehen, über die sie insbesondere zur Bildung der Heizstufe 28, einer jeweiligen Kondensations-/Verdampfungsstufe 12₁ - 12₃ und/oder der Kondensationsstufe 36 miteinander verbindbar sind. Dabei können die verschiedenen Rahmenelemente über die Stegstrukturen 40 beispielsweise miteinander verschweißt oder verklebt werden. Werden beispielsweise Schweißstegstrukturen verwendet, so kann zur Verbindung der Rahmenelemente beispielsweise ein Reibschweißverfahren, Laserschweißverfahren und/oder Heizelementschweißverfahren angewandt werden.

Die Rahmenelemente umfassen jeweils einen von einem äußeren Rahmen 42 umschlossenen Innenbereich 44, der vorzugsweise mit einem insbesondere gitterartigen Abstandshalter 46 versehen ist.

Fig. 3 zeigt in perspektivischer Darstellung eine beispielhafte Ausführungsform eines als Kondensationseinheit K ausgeführten Rahmenelements sowie eine beispielhafte Ausführungsform eines als Verdampfereinheit V ausgeführten Rahmenelements.

Insbesondere zur Bildung eines jeweiligen Dampfraums 18₁, 18₂, eines jeweiligen Heizfluidraums 34, eines jeweiligen Kühlfluidraums 38 oder zur Realisierung einer jeweiligen Vorwärmeinheit 50 können auf den beiden Seiten eines solchen, insbesondere gitterartigen Abstandshalters 46 insbesondere jeweils eine Folie oder Membran aufgebracht sein, um die betreffenden Funktionsflächen zu bilden.

Dabei werden im Fall einer Kondensationseinheit K vorzugsweise Folien und im Fall einer Verdampfereinheit V vorzugsweise dampfdurchlässige flüssigkeitsdichte Membranen verwendet.

In Fig. 3 sind die beiden in Form einer Kondensationseinheit K bzw. einer Verdampfungseinheit V vorgesehenen Rahmenelemente entsprechend der zu erfüllenden Funktion relativ zueinander angeordnet, wobei das in Form der Kondensationseinheit K vorgesehene Rahmenelement insbesondere mit Kondensationsfolie und das in Form der Verdampfungseinheit V vorgesehene Rahmenelement insbesondere mit Membran bespannt sein kann. Bei einer Beheizung der mehrstufigen Membrandestillationsvorrichtung kann das in Form einer Kondensationseinheit K vorgesehene Rahmenelement beispielsweise nach links und unten offen sein, so dass Dampf in diese Kondensationseinheit K eintreten und in dieser kondensieren kann. An den geschlossenen Seiten besitzt das in Form einer Kondensationseinheit V vorgesehene Rahmenelement insgesamt vorzugsweise wenigstens eine oder mehrere Durchführungen für die die nicht kondensierbaren Gase.

Durch das Zusammenbringen eines in Form einer Kondensationseinheit K vorgesehenen, mit Folie versehenen Rahmenelements und eines in Form einer Verdampfungseinheit V vorgesehenen, mit Membran versehenen Rahmenelements ergibt sich zwischen Membran und Folie ein jeweiliger die aufzukonzentrierende Flüssigkeit führender Strömungskanal 22.

In diesen Strömungskanal 22 kann noch ein Abstandshalter eingelegt werden. Anstelle eines solchen Abstandshalters kann beispielsweise auch der insbesondere gitterartige Abstandshalter 46 so ausgeführt werden, dass sich beim Füllen des Strömungskanals 22 definierte Kanäle zum Führen der Lösung ausbilden.

Wie anhand der Fig. 3 zu erkennen ist, können die äußeren Rahmen 42 der beiden jeweils in Form eines Rahmenelements vorgesehenen Einheiten K, V jeweils mit Durchgangsöffnungen 54 insbesondere für Heiz- oder Kühlfluid versehen sein. Wie beispielsweise anhand der Fig. 3 zu erkennen ist, kann dabei beispielsweise in jedem Eckbereich eines jeweiligen Rahmenelements jeweils eine solche Durchgangsöffnung 54 vorgesehen sein. Eine solche Durchgangsöffnung 54 kann zudem, wie ebenfalls beispielsweise der Fig. 1 entnommen werden kann, durch einen Stegabschnitt 56 auch zum Innenbereich 44 hin abgegrenzt sein.

Der äußere Rahmen 42 der beispielsweise in Form einer Kondensationseinheit K bzw. einer Verdampfereinheit V vorgesehenen Rahmenelemente kann zudem jeweils mit Durchgangsöffnungen 58 insbesondere für die aufzukonzentrierende Flüssigkeit 14 versehen sein. Diese Durchgangsöffnungen 58 liegen zwar ebenfalls innerhalb des äußeren Teils der Stegstrukturen 40, anders als die Durchgangsöffnungen 54 sind sie jedoch nicht gegenüber dem Innenbereich 44 abgegrenzt. Wie ebenfalls wieder anhand der Fig. 3 zu erkennen ist, kann in den Eckbereichen eines jeweiligen äußeren Rahmens 42 jeweils eine solche Durchgangsöffnung 58 vorgesehen sein.

Bei einer Beheizung der Membrandestillationsvorrichtung kann die rahmenförmige Kondensationseinheit K nach links unten offen sein, so dass Dampf eintreten und kondensieren kann. An den geschlossenen Seiten kann diese Kondensationseinheit K insgesamt mindestens eine oder mehrere Durchführungen für die nicht kondensierbaren Gase aufweisen.

Bei der in der Fig. 3 dargestellten Verdampfereinheit V sind ein nach oben und ein seitlich nach rechts mündender Dampfaustrittskanal 24 zu erkennen.

Fig. 4 zeigt in schematischer Vorderansicht das als Verdampfereinheit V ausgeführte Rahmenelement gemäß Fig. 3. Einander entsprechenden Teilen sind gleiche Bezugszeichen zugeordnet.

Im vorliegenden Fall ist auf den beiden Seiten des Abstandshalters 46 vorzugsweise jeweils eine Membran angeordnet.

Die rahmenartige Verdampfereinheit V kann z.B. nach rechts und nach oben offen sein, so dass Dampf an der Einheit austreten kann.

Fig. 5 zeigt in schematischer Vorderansicht das als Kondensationseinheit K ausgeführte Rahmenelement gemäß Fig. 3.

In der Fig. 5 sind unter anderem wieder die beispielsweise als Wasserkanal dienenden Durchgangsöffnungen 54 und die insbesondere als Kanal für die aufzukonzentrierende Flüssigkeit dienenden Durchgangsöffnungen 58 zu erkennen. Im vorliegenden Fall kann beidseitig des Abstandshalters 46 insbesondere jeweils eine Folie vorgesehen sein.

Einander entsprechenden Teilen sind gleiche Bezugszeichen zugeordnet.

Das im vorliegenden Fall beispielsweise beidseitig des Abstandshalters 46 jeweils mit einer Folie versehene Rahmenelement kann insbesondere zur Kondensation von Heizdampf oder aus einer jeweiligen Verdampfereinheit stammendem Dampf eingesetzt werden.

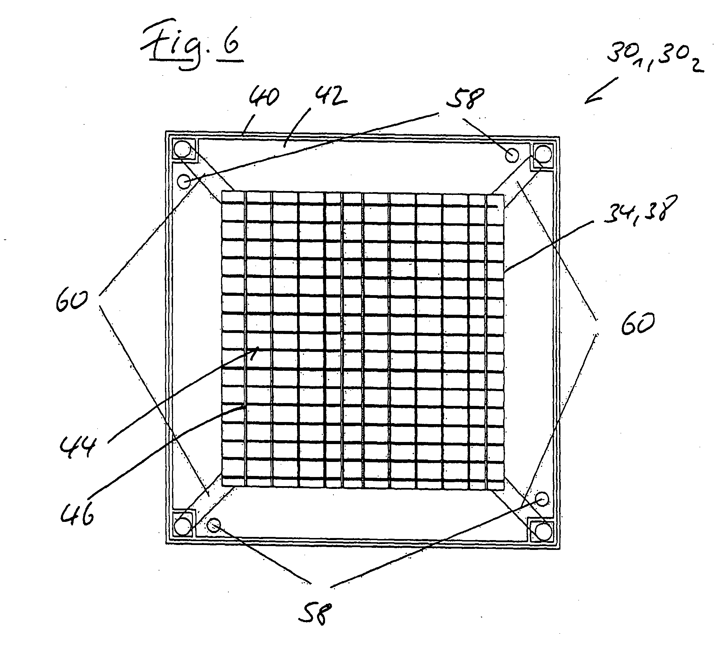

Fig. 6 zeigt in schematischer Vorderansicht eine beispielhafte Ausführungsform eines Rahmenelements, das als Heizeinheit 30₁ oder als Kühleinheit 30₂ eingesetzt werden kann. Der Abstandshalter 46 ist im vorliegenden Fall beidseitig insbesondere jeweils mit einer Folie versehen. Der zwischen den Folien gebildete Heizfluid- oder Kühlfluidraum 34 bzw. 38 wird vom Heiz- bzw. Kühlfluid, z.B. Wasser, durchströmt. Das Heiz- bzw. Kühlfluid wird über Kanäle 60, z.B. Wasserkanäle, dem Heiz- bzw. Kühlfluidraum 34 bzw. 38 zugeführt und aus diesem wieder entfernt.

In der Fig. 6 sind insbesondere auch wieder die als Kanäle für die aufzukonzentrierende Flüssigkeit dienenden Durchgangsöffnungen 58 zu erkennen.

Dieses Rahmenelement kann z.B. in der Heizstufe oder als Kühlelement in der Kondensationsstufe eingeätzt werden.

Auch in dieser Fig. 6 sind Teile, die denen der anderen Figuren entsprechen, wieder mit gleichen Bezugszeichen versehen.

Fig. 7 zeigt in schematischer Vorderansicht eine beispielhafte Ausführungsform einer eine Heizstufe 28, eine Kondensations-/Verdampfungsstufe 12₁ und eine Kondensationsstufe 36 umfassenden mehrstufigen Membrandestillationsvorrichtung 10. Bei der betreffenden mehrstufigen Membrandestillationsvorrichtung kann es sich also insbesondere um eine dreistufige Membrandestillationsvorrichtung handeln.

Wie anhand der Fig. 7 zu erkennen ist, können mehrere Reihen von Stufen 28, 12₁, 36 untereinander angeordnet sein.

Die Membrandestillationsvorrichtung 10 kann ein Gehäuse 62 umfassen, in dem die verschiedenen Stufen 28, 12₁, 36 aufgenommen sind und das zur Umgebung vorzugsweise vakuumdicht ist.

Beim in zur Fig. 7 dargestellten Ausführungsbeispiel sind auf der linken Seite parallel übereinander Heizstufen 28 angeordnet, wobei die Membrandestillationsvorrichtung 10 im vorliegenden Fall beispielsweise über von der linken Seiten zugeführten Prozessdampf beheizt wird. Dieser Dampf kann beispielsweise aus einer Dampfturbine stammen.

Der in Kondensationseinheiten K bzw. entsprechende Rahmenelemente der Heizstufe 28 eintretende Dampf kondensiert an den beispielsweise durch Folien gebildeten Kondensationswänden. Die Wärme wird über die Fläche an die aufzukonzentrierende Flüssigkeit übertragen, aus der durch die angrenzende Membran einer benachbarten Verdampfereinheit bzw. eines entsprechenden Rahmenelements in den betreffenden Dampfraum hinein, der mit dem Druck des Dampfraums der jeweiligen Kondensationseinheit bzw. des betreffenden Rahmenelements der nachfolgenden Stufe kommuniziert, Dampf entsteht.

Ein jeweiliger Kühlfluidraum der Heizstufe 28 ist vorzugsweise nur über Bohrungen für die nicht kondensierbaren Gase in den Kondensationseinheiten und eine Drossel am Boden zur Führung des Destillats in der Kondensations-/Verdampfungsstufe 12₁ mit der Kondensations-/Verdampfungsstufe verbunden. In der Kondensations-/Verdampfungsstufe 12 ist der Absolutdruck niedriger als in der Heizstufe 28.

Der in einem jeweiligen Dampfkanal der Heizstufe 28 entstehende Dampf kann in den jeweiligen unmittelbar gegenüberliegenden Dampfraum einer jeweiligen Kondensationseinheit der Kondensations-/Verdampfungsstufe 12₁ eintreten und kondensieren, wobei dazwischen jedoch noch ein Spalt insbesondere zum Abführen von Destillat verbleiben kann. Auch hier wird wieder Wärme übertragen und in dem Dampfraum einer jeweiligen benachbarten Verdampfereinheit der Kondensations-/Verdampfungsstufe 12₁, der mit dem Druckniveau des Dampfraums der jeweiligen Kondensationseinheit der Kondensationsstufe 36 kommuniziert, entsteht neuer Dampf.

In der Fig. 7 ist überdies eine Kondensatüberführung 64 beispielsweise zwischen untereinander angeordneten Stufen zu erkennen.

Teile, die mit denen der anderen Figuren übereinstimmen, sind mit gleichen Bezugszeichen versehen.

Fig. 8 zeigt in schematischer perspektivischer Ansicht eine mit der Ausführungsform gemäß Fig. 7 vergleichbare Ausführungsform der mehrstufigen Membrandestillationsvorrichtung 10, bei der jedoch zusätzlich wieder eine Vorwärmung der aufzukonzentrierenden Flüssigkeit vorgesehen ist. Dabei kann diese Vorwärmung beispielsweise wieder so ausgeführt sein, wie dies im Zusammenhang mit der Fig. 2 beschrieben wurde. Einander entsprechenden Teilen sind wieder gleiche Bezugszeichen zugeordnet.

Mit der erfindungsgemäßen mehrstufigen Membrandestillationsvorrichtung können sehr große Austauschflächen auf kleinem Volumen verbaut werden. Die verschiedenen Einheiten der Membrandestillationsvorrichtung können insbesondere durch entsprechende Rahmenelemente, die, wie aus den Figuren ersichtlich, insbesondere plattenförmig sein können, realisiert werden. Der aus einer jeweiligen Dampf erzeugenden Einheit austretende Dampf tritt in der unmittelbar darauf folgenden Stufe in einen Kondensationskanal, bzw. den Dampfraum einer Kondensationseinheit ein. Es addieren sich keine Dampfvolumenströme und es kommt damit zu keinen zunehmenden Strömungsgeschwindigkeiten, die bisher thermische Anlagen limitierten.

### Bezugszeichenliste

- 10: Membrandestillationsvorrichtung
- 12₁ - 12₃: Kondensations-/Verdampfungsstufe
- 14: aufzukonzentrierende Flüssigkeit
- 16: Kondensationswand
- 18₁: erster Dampfraum
- 18₂: zweiter Dampfraum
- 20: Membranwand
- 22: Strömungskanal
- 24: Dampfaustrittskanal
- 26: Dampfeintrittskanal
- 24, 26: Dampfkanal
- 28: Heizstufe
- 30₁: Heizeinheit
- 30₂: Kühleinheit
- 32: fluiddichte wärmeleitende Wand
- 34: Fluidraum
- 36: Kondensationsstufe
- 38: Kühlfluidraum
- 40: Stegstruktur
- 42: äußerer Rahmen
- 44: Innenbereich
- 46: Abstandshalter
- 50: Vorwärmeinheit
- 54: Durchgangsöffnung
- 56: Stegabschnitt
- 58: Durchgangsöffnung
- 60: Kanal, z.B. Wasserkanal
- 62: Gehäuse
- 64: Kondensatabführung
- 66: nicht kondensierbare Gase
- 68: Vorwärmung der aufzukonzentrierenden Flüssigkeit

- K: Kondensationseinheit
- V: Verdampfereinheit

## Patentansprüche

1. Mehrstufige Membrandestillationsvorrichtung (10) mit einer Heizstufe (28), wenigstens einer, vorzugsweise mehreren Kondensations-/ Verdampfungsstufen (12₁-12₃) und einer Kondensationsstufe (36), die nacheinander von einer aufzukonzentrierenden Flüssigkeit (14) durchströmt sind, wobei jede Kondensations-/Verdampfungsstufe (12₁-12₃) jeweils mehrere Kondensationseinheiten (K) und mehrere Verdampfereinheiten (V) sowie mehrere parallele, jeweils zwischen einer Kondensationseinheit (K) und einer an diese angrenzenden Verdampfereinheit (V) gebildete, die aufzukonzentrierende Flüssigkeit (14) führende Strömungskanäle (22) umfasst, eine jeweilige Kondensationseinheit (K) einen zumindest teilweise von einer Kondensationswand (16) begrenzten ersten Dampfraum (18₁) und eine jeweilige Verdampfereinheit (V) einen zumindest teilweise durch eine dampfdurchlässige flüssigkeitsdichte Membranwand (20) begrenzten zweiten Dampfraum (18₂) umfasst und in einer jeweiligen Kondensations-/Verdampfungsstufe (12₁-12₃) wenigstens ein zwischen einer solchen Kondensationseinheit (K) und einer solchen an diese angrenzenden Verdampfereinheit (V) gebildeter, die aufzukonzentrierende Flüssigkeit (14) führender Strömungskanal (22) vorgesehen ist, so dass die aufzukonzentrierende Flüssigkeit (14) über die Kondensationswand (16) erhitzt wird und der aus der aufzukonzentrierenden Flüssigkeit (14) entstehende Dampf durch die Membranwand (20) hindurch in den zweiten Dampfraum (18₂) gelangt,
**dadurch gekennzeichnet,**
**dass** der in einem jeweiligen Dampfraum (18₂) einer jeweiligen vorangehenden Stufe (28, 12₁-12₃, 36) entstehende Dampf jeweils über einen ausschließlich diesen Dampf führenden und diesen ausschließlich an die unmittelbar darauffolgende Stufe (12₁-12₃, 36) weiterführenden Dampfkanal (24, 26) in eine Kondensationseinheit (K) der unmittelbar darauffolgenden Stufe (12₁-12₃, 36) überführt wird, wobei der in einem jeweiligen Dampfraum (18₂) einer jeweiligen vorangehenden Stufe (28, 12₁-12₃) entstehende Dampf über den betreffenden Dampfkanal (24, 26) jeweils in nur eine Kondensationseinheit (K) der unmittelbar darauffolgenden Stufe (12₁-12₃, 36) überführt wird.

2. Mehrstufige Membrandestillationsvorrichtung nach Anspruch 1,
**dadurch gekennzeichnet,**
**dass** zur Bildung eines jeweiligen Dampfkanals (24, 26) zwischen einer jeweiligen Verdampfereinheit (V) einer jeweiligen vorangehenden Stufe (28, 12₁-12₃) und einer jeweiligen Kondensationseinheit (K) einer jeweiligen unmittelbar darauffolgenden Stufe (12₁-12₃, 36) die Verdampfereinheit (V) einen Dampfaustrittskanal (24) und die Kondensationseinheit (K) einen Dampfeintrittskanal (26) besitzt und die beiden Einheiten (V, K) so angeordnet sind, dass sie mit ihren den Dampfaustrittskanal (24) bzw. den Dampfeintrittskanal (26) aufweisenden Seiten einander unmittelbar benachbart und zugewandt sind.

3. Mehrstufige Membrandestillationsvorrichtung nach einem der vorhergehenden Ansprüche,
**dadurch gekennzeichnet,**
**dass** die Heizstufe (28), in der die zugeführte aufzukonzentrierende Flüssigkeit (14) vorgeheizt wird, wenigstens eine Heizeinheit (30₁) und wenigstens eine Verdampfereinheit (V) umfasst, wobei eine jeweilige Heizeinheit (30₁) einen zumindest teilweise von einer fluiddichten wärmeleitenden Wand (32) begrenzten Heizfluidraum (34) und eine jeweilige Verdampfereinheit (V) einen zumindest teilweise durch eine dampfdurchlässige flüssigkeitsdichte Membranwand (20) begrenzten Dampfraum (18₂) umfasst und in der Heizstufe (28) wenigstens ein zwischen einer Heizeinheit (30₁) und einer an diese angrenzenden Verdampfereinheit (V) gebildeter, die aufzukonzentrierende Flüssigkeit (14) führender Strömungskanal (22) vorgesehen ist, so dass die aufzukonzentrierende Flüssigkeit (14) über die fluiddichte wärmeleitende Wand (32) vorgeheizt wird und der aus der aufzukonzentrierenden Flüssigkeit (14) entstehende Dampf durch die Membranwand (20) hindurch in den Dampfraum (18₂) gelangt.

4. Mehrstufige Membrandestillationsvorrichtung nach Anspruch 3,
**dadurch gekennzeichnet,**
**dass** der Dampf aus dem Dampfraum (18₂) einer jeweiligen Verdampfereinheit (V) der Heizstufe (28) über einen ausschließlich diesen Dampf führenden und diesen ausschließlich an die unmittelbar darauffolgende Kondensations-/Verdampfungsstufe (12₁-12₃) weiterführenden Dampfkanal (24, 26) in eine Kondensationseinheit (K) dieser unmittelbar darauffolgenden Kondensations-/Verdampfungsstufe (12₁-12₃) überführt wird, wobei der Dampf aus dem Dampfraum (18₂) einer jeweiligen Verdampfereinheit (V) der Heizstufe (28) über den betreffenden Dampfkanal (24, 26) jeweils in nur eine Kondensationseinheit (K) der unmittelbar darauffolgenden Kondensations-/Verdampfungsstufe (12₁-12₃) überführt wird.

5. Mehrstufige Membrandestillationsvorrichtung nach Anspruch 3 oder 4, **dadurch gekennzeichnet,**
**dass** die Heizstufe (28) mehrere Heizeinheiten (30₁) und/oder mehrere Verdampfereinheiten (V) sowie mehrere parallele, jeweils zwischen einer Heizeinheit (30₁) und einer an diese angrenzenden Verdampfereinheit (V) gebildete die aufzukonzentrierende Flüssigkeit (14) führende Strömungskanäle (22) aufweist.

6. Mehrstufige Membrandestillationsvorrichtung nach einem der Ansprüche 4 oder 5,
**dadurch gekennzeichnet,**
**dass** zur Bildung eines jeweiligen Dampfkänals (24, 26) zwischen einer jeweiligen Verdampfereinheit (V) der Heizstufe(28) und einer jeweiligen Kondensationseinheit (K) der unmittelbar darauffolgenden Kondensations-/Verdampfungsstufe (12₁-12₃) die Verdampfereinheit (V) einen Dampfaustrittskanal (24) und die Kondensationseinheit (K) einen Dampfeintrittskanal (26) besitzt und die beiden Einheiten (V, K) so angeordnet sind, dass sie mit ihren den Dampfaustrittskanal (24) bzw. den Dampfeintrittskanal (26) aufweisenden Seiten einander unmittelbar benachbart und zugewandt sind.

7. Mehrstufige Membrandestillationsvorrichtung nach einem der vorhergehenden Ansprüche,
**dadurch gekennzeichnet,**
**dass** der der letzten Kondensations-/Verdampfungsstufe (12₃) unmittelbar nachgeordneten Kondensationsstufe (36) der Dampf aus einer jeweiligen Verdampfereinheit (V) der letzten Kondensations-/ Verdampfungsstufe (12₃) zugeführt wird.

8. Mehrstufige Membrandestillationsvorrichtung nach Anspruch 7,
**dadurch gekennzeichnet,**
**dass** die Kondensationsstufe (36) wenigstens eine Kühleinheit (30₂) und wenigstens eine Kondensationseinheit (K) umfasst, wobei eine jeweilige Kühleinheit (30₂) einen zumindest teilweise von einer fluiddichten wärmeleitenden Wand (32) begrenzten Kühlfluidraum (38) und eine jeweilige Kondensationseinheit (K) wieder einen zumindest teilweise von einer Kondensationswand (16) begrenzten Dampfraum (18₁) umfasst, dem über einen jeweiligen Dampfkanal (24, 26) Dampf aus der letzten Kondensations-/Verdampfungsstufe (12₃) zugeführt wird, und in der Kondensationsstufe (K) wenigstens eine Kühleinheit (30₂) zumindest einer Kondensationseinheit (K) unmittelbar benachbart ist, so dass die Kondensationswand (16) der jeweiligen Kondensationseinheit (K) über die Kühleinheit (30₂) gekühlt wird.

9. Mehrstufige Membrandestillationsvorrichtung nach Anspruch 8,
**dadurch gekennzeichnet,**
**dass** der Dampf aus einer jeweiligen Verdampfereinheit (V) der letzten Kondensations-/Verdampfungsstufe (12₃) über einen ausschließlich diesen Dampf führenden und diesen ausschließlich an die Kondensationsstufe (36) weiterführenden Dampfkanal (24, 26) in eine Kondensationseinheit (K) der Kondensationsstufe (36) geführt wird.

10. Mehrstufige Membrandestillationsvorrichtung nach Anspruch 8 oder 9,
**dadurch gekennzeichnet,**
**dass** die Kondensationsstufe (36) mehrere Kühleinheiten (30₂) und/oder mehrere Verdampfereinheiten (V) umfasst.

11. Mehrstufige Membrandestillationsvorrichtung nach einem der Ansprüche 8 bis 10,
**dadurch gekennzeichnet,**
**dass** der Dampf aus dem Dampfraum (18₂) einer jeweiligen Verdampfereinheit (V) der letzten Kondensations-/Verdampfungsstufe (12₃) über den betreffenden Dampfkanal (24, 26) jeweils in nur eine Kondensationseinheit (K) der Kondensationsstufe (36) überführt wird.

12. Mehrstufige Membrandestillationsvorrichtung nach Anspruch 11,
**dadurch gekennzeichnet,**
**dass** zur Bildung eines jeweiligen Dampfkanals (24, 26) zwischen einer jeweiligen Verdampfereinheit (V) der letzten Kondensations-/ Verdampfungsstufe (12₃) und einer jeweiligen Kondensationseinheit (K) der unmittelbar darauffolgenden Kondensationsstufe (36) die Verdampfereinheit (V) einen Dampfaustrittskanal (24) und die Kondensationseinheit (K) einen Dampfeintrittskanal (26) besitzt und die beiden Einheiten (V, K) so angeordnet sind, dass sie mit ihren den Dampfaustrittskanal (24) bzw. den Dampfeintrittskanal (26) aufweisenden Seiten einander unmittelbar benachbart und zugewandt sind.

13. Mehrstufige Membrandestillationsvorrichtung nach einem der vorhergehenden Ansprüche,
**dadurch gekennzeichnet,**
**dass** sie als modulares Strömungssystem mit einer Vielzahl von Rahmenelementen ausgeführt ist und die verschiedenen Funktionseinheiten wie insbesondere eine jeweilige Kondensationseinheit (K), eine jeweilige Verdampfereinheit (V), eine jeweilige Heizeinheit (30₁) und/oder eine jeweilige Kühleinheit (30₂) jeweils in Form eines solchen Rahmenelements vorgesehen sind, wobei die Rahmenelemente vorzugsweise mit Stegstrukturen (40) versehen sind, über die sie insbesondere zur Bildung der Heizstufe (28), einer jeweiligen Kondensations-/Verdampferstufe (12₁-12₃) und/oder der Kondensationsstufe (36) miteinander verbindbar sind, und jeweils einen von einem äußeren Rahmen (42) umschlossenen Innenbereich (44) umfassen, der vorzugsweise mit einem insbesondere gitterartigen Abstandshalter (46) versehen ist, auf dessen beiden Seiten zur Bildung eines jeweiligen Dampfraums (18₁, 18₂), eines jeweiligen Heizfluidraums (34) oder eines jeweiligen Kühlfluidraums (38) insbesondere jeweils eine Funktionsfläche, vorzugsweise eine Folie oder Membran aufgebracht ist.

14. Mehrstufige Membrandestillationsvorrichtung nach einem der vorhergehenden Ansprüche,
**dadurch gekennzeichnet,**
**dass** sie zumindest drei Kondensations-/Verdampferstufen (12₁-12₃) umfasst.

## Claims

1. A multistage membrane distillation apparatus (10) comprising a heating stage (28), at least one, preferably a plurality of condensation/evaporation stages (12₁ - 12₃) and a condensation stage (36) which are successively flowed through by a liquid (14) to be concentrated, wherein each condensation/ evaporation stage (12₁ - 12₃) respectively comprises a plurality of condensation units (K) and a plurality of evaporator units (V) as well as a plurality of parallel flow passages (22) which are each formed between a condensation unit (K) and an evaporator unit (V) adjacent to it and which conduct the liquid (14) to be concentrated; a respective condensation unit (K) comprises a first steam space (18₁) at least partly bounded by a condensation wall (16); and a respective evaporator unit (V) comprises a second steam space (18₂) at least partly bounded by a steam-permeable, liquid tight membrane wall (20); and at least one flow channel (22), which is formed between such a condensation unit (K) and such an evaporator unit (V) adjoining it and which conducts the liquid (14) to be concentrated, is provided in a respective condensation/evaporation stage (12₁-12₃) such that the liquid (14) to be concentrated is heated via the condensation wall (16) and the steam arising from the liquid (14) to be concentrated moves through the membrane wall (20) into the second steam space (18₂),
**characterized in that**
the steam arising in a respective steam space (18₂) of a respective preceding stage (28, 12₁- 12₃, 36) is respectively conveyed into a condensation unit (K) of the directly following stage (12₁ - 12₃, 36) via a steam passage (24, 26) only conducting this steam and only conducting it onward to the directly following stage (12₁ - 12₃, 36), wherein the steam arising in a respective steam space (18₂) of a respective preceding stage (28, 12₁ - 12₃) is conveyed via the respective steam passage (24, 26) into a respective only one condensation unit (K) of the directly following stage (12₁ - 12₃, 36).

2. A multistage membrane distillation apparatus in accordance with claim 1,
**characterized in that**
the evaporator unit (V) has a steam outlet passage (24) and the condensation unit (K) has a steam inlet passage (26) for forming a respective steam passage (24, 26) between a respective evaporator unit (V) of a respective preceding stage (28, 12₁ - 12₃) and a respective condensation unit (K) of a directly following stage (12₁-12₃, 36) and the two units (V, K) are arranged such that their sides having the steam outlet passage (24) and the steam inlet passage (26) respectively are directly adjacent to and face one another.

3. A multistage membrane distillation apparatus in accordance with any one of the preceding claims,
**characterized in that**
the heating stage (28) in which the supplied liquid (14) to be concentrated is preheated comprises at least one heating unit (30₁) and at least one evaporator unit (V), wherein a respective heating unit (30₁) comprises a heating fluid space (34) at least partly bounded by a fluid-tight, heat-conducting wall (32) and a respective evaporator unit (V) comprises a steam space (18₂) at least partly bounded by a steam-permeable, liquid-tight membrane wall (20) and at least one flow passage (22) is provided in the heating stage (28), is formed between a heating unit (30₁) and an evaporator unit (V) adjacent to it and conducts the liquid (14) to be concentrated such that the liquid (14) to be concentrated is preheated via the fluid-tight, heat-conducting wall (32) and the steam arising from the liquid (14) to be concentrated moves through the membrane wall (20) into the steam space (18₂).

4. A multistage membrane distillation apparatus in accordance with claim 3,
**characterized in that**
the steam is conveyed from the steam space (18₂) of a respective evaporator unit (V) of the heating stage (28) into a condensation unit (K) of this directly following condensation/ evaporation stage (12₁-12₃) via a steam passage (24, 26) which only conveys this steam and which only conveys it onward to the directly following condensation/evaporation stage (12₁ - 12₃), wherein the steam is conveyed from the steam space (18₂) of a respective evaporator unit (V) of the heating stage (28) via the respective steam channel (24, 26) into a respective only one condensation unit (K) of the directly following condensation/evaporation stage (12₁ - 12₃).

5. A multistage membrane distillation apparatus in accordance with claim 3, or claim 4,
**characterized in that**
the heating stage (28) has a plurality of heating units (30₁) and/or a plurality of evaporator units (V) as well as a plurality of parallel flow passages (22) each formed between a heating unit (30₁) and an evaporator unit (V) adjoining it, said flow passages conducting the liquid (14) to be concentrated.

6. A multistage membrane distillation apparatus in accordance with one of the claims 4 or 5,
**characterized in that**
the evaporator unit (V) has a steam outlet passage (24) and the condensation unit (K) has a steam inlet passage (26) for forming a respective steam passage (24, 26) between a respective evaporator unit (V) of the heating stage (28) and a respective condensation unit (K) of the directly following condensation/ evaporation stage (12₁-12₃) and the two units (V, K) are arranged such that their sides having the steam outlet passage (24) and the steam inlet passage (26) respectively are directly adjacent to and face one another.

7. A multistage membrane distillation apparatus in accordance with any one of the preceding claims,
**characterized in that**
the steam from a respective evaporator unit (V) of the last condensation/evaporation stage (12₃) is supplied to the condensation stage (36) disposed directly downstream of the last condensation/evaporation stage (12₃).

8. A multistage membrane distillation apparatus in accordance with claim 7,
**characterized in that**
the condensation stage (36) comprises at least one cooling unit (30₂) and at least one condensation unit (K), wherein a respective cooling unit (30₂) comprises a cooling fluid space (38) at least partly bounded by a fluid-tight, heat-conducting wall (32) and a respective condensation unit (K) again comprises a steam space (18₁) which is at least partly bounded by a condensation wall (16) and to which steam from the last condensation/evaporation stage (12₃) is supplied via a respective steam passage (24, 26) and at least one cooling unit (30₂) is directly adjacent to at least one condensation unit (K) in the condensation stage (K) such that the condensation wall (16) of the respective condensation unit (K) is cooled via the cooling unit (30₂).

9. A multistage membrane distillation apparatus in accordance with claim 8,
**characterized in that**
the steam is conducted into a condensation unit (K) of the condensation stage (36) from a respective evaporator unit (V) of the last condensation/evaporation stage (12₃) via a steam passage (24, 26) only conducting this steam and only conducting it onward to the condensation stage (36).

10. A multistage membrane distillation apparatus in accordance with claim 8 or claim 9,
**characterized in that**
the condensation stage (36) comprises a plurality of cooling units (30₂) and/ or a plurality of evaporator units (V).

11. A multistage membrane distillation apparatus in accordance with any one of the claims 8 to 10,
**characterized in that**
the steam from the steam space (18₂) of a respective evaporator unit (V) of the last condensation/ evaporation stage (12₃) is conveyed via the respective steam passage (24, 26) into a respective only one condensation unit (K) of the condensation stage (36).

12. A multistage membrane distillation apparatus in accordance with claim 11,
**characterized in that**
the evaporator unit (V) has a steam outlet passage (24) and the condensation unit (K) has a steam inlet passage (26) for forming a respective steam passage (24, 26) between a respective evaporator unit (V) of the last condensation/evaporation stage (12₃) and a respective condensation unit (K) of the directly following condensation stage (36) and the two units (V, K) are arranged such that their sides having the steam outlet passage (24) and the steam inlet passage (26) respectively are directly adjacent to and face one another.

13. A multistage membrane distillation apparatus in accordance with any one of the preceding claims,
**characterized in that**
it is configured as a modular flow system comprising a plurality of frame elements and the different functional units such as in particular a respective condensation unit (K), a respective evaporator unit (V), a respective heating unit (30₁) and/or a respective cooling unit (30₂) are each provided in the form of such a frame element, with the frame elements preferably being provided with web structures (40) via which they can in particular be connected to one another for forming the heating stage (28), a respective condensation/ evaporation stage (12₁ - 12₃) and/or the condensation stage (36) and each comprise an inner region (44) which is surrounded by an outer frame (42) and which is preferably provided with an in particular grid-like spacer (46) on whose two sides in particular a respective functional surface, preferably a film or a membrane, is applied for forming a respective steam space (18₁, 18₂), a respective heating fluid space (34) or a respective cooling fluid space (38).

14. A multistage membrane distillation apparatus in accordance with any one of the preceding claims,
**characterized in that**
it comprises at least three condensation/ evaporation stages (12₁-12₃).

## Revendications

1. Dispositif de distillation à membrane à plusieurs étages (10) avec un étage de chauffage (28), au moins un et de préférences plusieurs étages de condensation/évaporation (12₁-12₃) et un étage de condensation (36), qui sont traversés les uns après les autres par l'écoulement d'un liquide (14) à concentrer, dans lequel chaque étage de condensation/évaporation (12₁-12₃) inclut respectivement plusieurs unités de condensation (K) et plusieurs unités d'évaporation (V), ainsi que plusieurs canaux d'écoulement parallèles (22), réalisés respectivement entre une unité de condensation (K) et une unité d'évaporation (V) adjacente à celle-ci, et menant le liquide à concentrer (14), une unité de condensation respective (K) comprend une première chambre à vapeur (18₁) délimitée au moins partiellement par une paroi de condensation (16), et une unité d'évaporation respective (V) comprend une seconde chambre à vapeur (18₂) délimitée au moins partiellement par une paroi à membrane (20) perméable à la vapeur et étanche aux fluides, et dans un étage de condensation/évaporation respectif (12₁-12₃) il est prévu au moins un canal d'écoulement (22) formé entre une telle unité de condensation (K) et une telle unité d'évaporation (V) adjacente à celle-ci, qui mène le liquide à concentrer (14), de sorte que le liquide à concentrer (14) est échauffé via la paroi de condensation (16) et la vapeur émanant du liquide à concentrer (14) parvient dans la seconde chambre à vapeur (18₂) en traversant la paroi à membrane (20),
**caractérisé en ce que**
la vapeur qui apparaît dans une chambre à vapeur respective (18₂) d'un étage respectivement précédent (28, 12₁-12₃, 36) est transférée, respectivement via un canal à vapeur (24, 26) qui mène exclusivement cette vapeur et qui la transfère exclusivement à l'étage immédiatement successif (12₁-12₃, 36), vers une unité de condensation (K) de l'étage immédiatement successif (12₁-12₃, 36), dans lequel la vapeur qui apparaît dans une chambre à vapeur respective (18₂) d'un étage respectivement précédent (28, 12₁-12₃) est transférée via le canal à vapeur concerné (24, 26) respectivement uniquement dans une unité de condensation (K) de l'étage immédiatement successif (12₁-12₃, 36).

2. Dispositif de distillation à membrane à plusieurs étages selon la revendication 1,
**caractérisé en ce que**
pour la formation d'un canal à vapeur respectif (24, 26) entre une unité d'évaporation respective (V) d'un étage respectivement précédent (28, 12₁-12₃) et une unité de condensation respective (K) d'un étage respectif immédiatement successif (12₁-12₃, 36), l'unité d'évaporation (V) possède un canal de sortie de vapeur (24) et l'unité de condensation (K) possède un canal d'entrée de vapeur (26), et les deux unités (V, K) sont agencées de telle façon qu'elles sont mutuellement directement voisines et tournées l'une vers l'autre avec leur côté qui comporte le canal de sortie de vapeur (24) ou respectivement le canal d'entrée de vapeur (26).

3. Dispositif de distillation à membrane à plusieurs étages selon l'une des revendications précédentes,
**caractérisé en ce que**
l'étage de chauffage (28), dans lequel le liquide à concentrer admis (14) est préchauffé, inclut au moins une unité de chauffage (30₁) et au moins une unité d'évaporation (V), dans lequel une unité de chauffage respective (30₁) inclut une chambre à fluide chauffant (34) délimitée au moins partiellement par une paroi (32) étanche aux fluides et thermoconductrice, et une unité d'évaporation respective (V) inclut une chambre à vapeur (18₂) délimitée au moins partiellement par une paroi à membrane (20) perméable à la vapeur et étanche aux fluides, et dans l'étage de chauffage (28) il est prévu au moins un canal d'écoulement (22) formé entre une unité de chauffage (30₁) et une unité d'évaporation (V) adjacente à celle-ci, qui mène le liquide à concentrer (14), de sorte que le liquide à concentrer (14) est préchauffé via la paroi (32) étanche aux fluides et thermoconductrice, et la vapeur qui émane du liquide à concentrer (14) parvient dans la chambre à vapeur (18₂) à travers la paroi à membrane (20).

4. Dispositif de distillation à membrane à plusieurs étages selon la revendication 3,
**caractérisé en ce que**
la vapeur provenant de la chambre à vapeur (18₂) d'une unité d'évaporation respective (V) de l'étage de chauffage (28) est transférée, via un canal à vapeur (24, 26) qui mène exclusivement cette vapeur et qui la transfère exclusivement à l'étage de condensation/évaporation (12₁-12₃) immédiatement successif, vers une unité de condensation (K) de cet étage de condensation/évaporation (12₁-12₃) immédiatement successif, et la vapeur provenant de la chambre à vapeur (18₂) d'une unité d'évaporation respective (V) de l'étage de chauffage (28) est transférée via le canal à vapeur concerné (24, 26) respectivement uniquement vers une unité de condensation (K) de l'étage de condensation/évaporation (12₁-12₃) immédiatement successif.

5. Dispositif de distillation à membrane à plusieurs étages selon la revendication 3 ou 4,
**caractérisé en ce que** l'étage de chauffage (28) comprend plusieurs unités de chauffage (30₁) et/ou plusieurs unités d'évaporation (V) ainsi que plusieurs canaux d'écoulement parallèles (22), formés respectivement entre une unité de chauffage (30₁) et une unité d'évaporation (V) adjacente à celle-ci, qui mènent le liquide à concentrer (14).

6. Dispositif de distillation à membrane à plusieurs étages selon l'une des revendications 4 ou 5,
**caractérisé en ce que**
pour former un canal à vapeur respectif (24, 26) entre une unité d'évaporation respective (V) de l'étage de chauffage (28) et une unité de condensation respective (K) de l'étage de condensation/évaporation (12₁-12₃) immédiatement successif, l'unité d'évaporation (V) possède un canal de sortie de vapeur (24) et l'unité de condensation (K) possède un canal d'entrée de vapeur (26), et les deux unités (V, K) sont agencées de telle façon qu'elles sont mutuellement directement voisines et tournées l'une vers l'autre avec leurs côtés qui comportent le canal de sortie de vapeur (24) ou respectivement le canal d'entrée de vapeur (26).

7. Dispositif de distillation à membrane à plusieurs étages selon l'une des revendications précédentes,
**caractérisé en ce que** la vapeur provenant d'une unité d'évaporation respective (V) du dernier étage de condensation/évaporation (12₃) est amenée à l'étage de condensation (36) agencé immédiatement à la suite du dernier étage de condensation/évaporation (12₃).

8. Dispositif de distillation à membrane à plusieurs étages selon la revendication 7,
**caractérisé en ce que**
l'étage de condensation (36) comprend au moins une unité de refroidissement (30₂) et au moins une unité de condensation (K), dans lequel une unité de refroidissement respective (30₂) inclut une chambre à fluide de refroidissement (38) délimitée au moins partiellement par une paroi (32) étanche aux fluides et thermoconductrice, et une unité de condensation respective (K) inclut à son tour une chambre à vapeur (18₁) délimitée au moins partiellement par une paroi de condensation (16), chambre à laquelle est admise, via un canal à vapeur respectif (24,26), la vapeur provenant du dernier étage de condensation/évaporation (12₃), et dans l'étage de condensation (K) au moins une unité de refroidissement (30₂) est immédiatement voisine d'au moins une unité de condensation (K), de sorte que la paroi de condensation (16) de l'unité de condensation respective (K) est refroidie via l'unité de refroidissement (302).

9. Dispositif de distillation à membrane à plusieurs étages selon la revendication 8,
**caractérisé en ce que**
la vapeur provenant d'une unité d'évaporation respective (V) du dernier étage de condensation/évaporation (12₃) est menée, via un canal à vapeur (24, 26) qui mène exclusivement cette vapeur et qui transfère celle-ci exclusivement à l'étage de condensation (36), vers une unité de condensation (K) de l'étage de condensation (36).

10. Dispositif de distillation à membrane à plusieurs étages selon la revendication 8 ou 9,
**caractérisé en ce que** l'étage de condensation (36) inclut plusieurs unités de refroidissement (30₂) et/ou plusieurs unités d'évaporation (V).

11. Dispositif de distillation à membrane à plusieurs étages selon l'une des revendications 8 à 10,
**caractérisé en ce que** la vapeur provenant de la chambre à vapeur (18₂) d'une unité d'évaporation respective (V) du dernier étage de condensation/évaporation (12₃) est transférée via le canal à vapeur concerné (24, 26) respectivement uniquement vers une unité de condensation (K) de l'étage de condensation (36).

12. Dispositif de distillation à membrane à plusieurs étages selon la revendication 11,
**caractérisé en ce que**,
pour former un canal à vapeur respectif (24, 26) entre une unité d'évaporation respective (V) du dernier étage de condensation/évaporation (12₃) et une unité de condensation respective (K) de l'étage de condensation (36) immédiatement successif, l'unité d'évaporation (V) possède un canal de sortie de vapeur (24) et l'unité de condensation (K) possède un canal d'entrée de vapeur (26), et les deux unités (VK) sont agencées de telle façon qu'elles sont mutuellement immédiatement voisines et tournées l'une vers l'autre avec leurs côtés qui comportent le canal de sortie de vapeur (24) ou respectivement le canal d'entrée de vapeur (26).

13. Dispositif de distillation à membrane à plusieurs étages selon l'une des revendications précédentes,
**caractérisé en ce qu'**il est réalisé sous forme de système d'écoulement modulaire avec une pluralité d'éléments de cadre et les diverses unités fonctionnelles, comme en particulier une unité de condensation respective (K), une unité d'évaporation respective (V), une unité de chauffage respective (30₁) et/ou une unité de refroidissement respective (30₂) sont prévues respectivement sous la forme d'un tel élément de cadre, lesdits éléments de cadre étant de préférence dotés de structures en forme de barrettes (40) via lesquelles ils peuvent être reliés les uns aux autres, en particulier pour la réalisation de l'étage de chauffage (28), d'un étage de condensation/évaporation respectif (12₁-12₃) et/ou de l'étage de condensation (36), et incluent chacun une zone intérieure (44) enfermée par un cadre extérieur (42), zone qui est dotée de préférence d'un élément d'écartement (46) en particulier analogue à une grille, sur les deux côtés de laquelle est rapportée une surface fonctionnelle respective, de préférence un film ou une membrane, pour former une chambre à vapeur respective (18₁, 18₂), une chambre à fluide de chauffage respective (34) ou une chambre à fluide de refroidissement respective (38).

14. Dispositif de distillation à membrane à plusieurs étages selon l'une des revendications précédentes,
**caractérisé en ce qu'**il comprend au moins trois étages de condensation/évaporation (121-123).
